# EUROPEAN PATENT SPECIFICATION

(11) **EP 2 824 572 B1**
(45) Date of publication and mention of the grant of the patent: **25.05.2016**
(21) Application number: 13176326.0
(22) Date of filing: 12.07.2013
(51) Int. Cl.: G06F 11/16, G06F 11/18

(54) **Fail safe device and method for operating the fail safe device**
Ausfallsichere Vorrichtung und Verfahren zum Betreiben der ausfallsicheren Vorrichtung
Dispositif de sûreté et procédé pour faire fonctionner ledit dispositif

(43) Date of publication of application: 14.01.2015
(73) Proprietor: Thales Deutschland GmbH, 71254 Ditzingen (DE)
(72) Inventor: Ilie, Gabriel Cristian, Richmond Hil L4S 2R6 (CA); Maringer, Daniel, 71254 Ditzingen (DE); Niedermayer, Klaus, 71522 Backnang (DE); Grund, Daniel, 70825 Korntal-Münchingen (DE)
(74) Representative: Kohler Schmid Möbus Patentanwälte

(56) References cited:
- EP-A2- 0 381 334
- EP-A2- 0 556 805
- DE-A1- 19 532 640
- US-A1- 2012 023 389

## Description

The invention concerns a fail-safe-system for a Data Output System and a method for operating a fail-safe system.

### Background of the invention

The present invention relates to safety-critical systems (railway, aviation, nuclear, etc.) where required elevated safety levels are obtained by implementation of multiple independent functional blocks (channels). It is generally accepted that a failure that would potentially produce an unsafe output (and by consequence loss of life and/or expensive property damage) cannot simultaneously be produced in all blocks. Thus, by functional multiplication, the probability of unsafe failure at system level is greatly reduced.

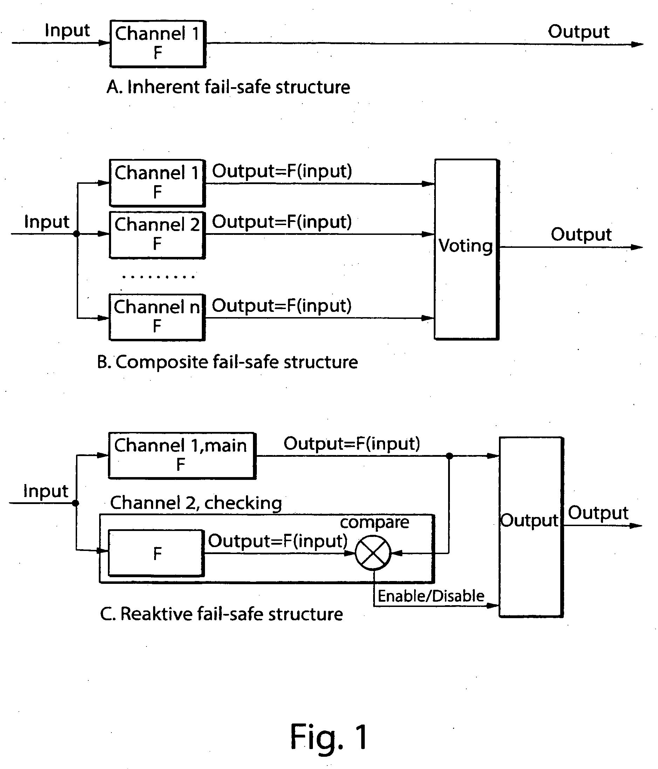

In railway industry for example, by general practice and by safety specific standard recommendations (EN50129), such multiple block structure is used under the term "Composite fail-safety". Such structure is depicted in Fig.1B. Other structures also used in the industry are depicted in Fig. 1A and Fig. 1C.

For the Composite fail-safe implementation as shown in Fig. 1B different channels share the same input while the outputs of the channels are voted. Possible outputs are "High" and "Low". A supplementary block called "voter" is provided; so the system output is chosen depending on the following criteria: If unanimity (or majority) of the outputs are in "High" (closed circuit) state, the output of the voter is "High", otherwise the output of the voter is "Low" (open circuit). I.e. One channel cannot drive the output in "High" state only by itself, but always in conjunction with at least another channel, thereby reducing the risk of an erroneous output. the critical component of the before described Composite fail-safety implementation is the voter. In order to ensure reliability of the voter, the voter has to be tested frequently (which is time consuming) or the system has to be equipped with a redundant voter (i.e. additional hardware is required).

Composite fail-safe devices as described above are preferably used for a direct digital (ON/OFF) output, but they require additional hardware and software for subsystems that output complex data messages (telegrams).

A telegram is a data bit stream, i.e. a sequence of bits. It preferably comprises an address block, an information block and a CRC block. Subsystems that output telegrams are referred to as "Data Output Systems".

In general a telegram is transmitted towards another subsystem over a data transmission medium (such copper wires, radio, optical fiber, etc.). The telegram is constructed in such way that transmission medium does not pose a threat to the safety function of the system by noise, distortion or interference. Some of the most implemented countermeasures in this direction are: proper modulation and channel protection according to the transmission medium, restricted alphabet used to compose the telegram, restricted internal structure of the telegram, data encryption, partial (internal) parity check codes (CRC) and general parity check code for the entire telegram (CRC), appended at the end of transmission

Most of the known structural implementations for Data Output Systems rely on the principle of Reactive Fail-Safe presented in Fig. 1C or do rely on a composite digital output structure presented in Fig. 1A and 1C. Both solutions require safe voters or safe comparators.

EP 0 556 805 A2 discloses an information processing system to realize a fail-safe function by software. At least three information processors are provided. In each information processor, the same data added with a cyclic redundancy code is subjected to a predetermined masking process and is thereafter encoded on the basis of a cyclic logical shift. A logical product or exclusive OR combination of encoded data from the information processors is made and is subjected to an inverse cyclic logical shift for decoding into an original data. By displaying the decoded data on a display device or the like, the original data becomes identifiable since a character having a meaning is displayed if the decoded data is normal and a character not clear in meaning is displayed if the decoded data is abnormal.

### Object of the invention

It is an object of the invention to provide a fail-safe system and a method for operating a fail safe system with a simple structure.

### Summary of the invention

This object is solved by a fail-safe system according to claim 1 and a method according to claim 11.

According to the invention the fail-safe device comprises: at least one memory unit with a prerecorded set of offline-generated first telegrams and a prerecorded set of offline-generated complementary second telegrams, wherein an XOR-operation on one of the first telegrams and its complementary second telegram results in an offline constructed original telegram; at least one input processor for selecting one of the stored first telegrams and one of the stored second telegrams; an XOR-device with a first input channel for transmitting the selected first telegram, a second input channel for transmitting the selected second telegram, and with an output channel for transmitting a third telegram, the third telegram being the result of an XOR-operation of the first and the second telegram; and a receiving subsystem for receiving the third telegram.

In contrast to composite fail safe systems known from the state of the art the inventive system shows a simplified architecture. In particular less electronic components have to be provided, thereby reducing the risk of failures.

The set of first telegrams comprises n first telegrams, with n ≥ 1. The set of second telegrams comprises m second telegrams, with m ≥ 1; preferably m = n. Each second telegram complements at least one of the first telegrams. The first and its complementary second telegram are constructed from an original telegram and are stored in the memory unit(s). The original telegram which should be transmitted in a safe manner according to the invention comprises a sequence of bits. By reverse XOR-operation for each original telegram a first telegram and a second telegram is generated, which result in a third telegram which coincides with the original telegram when an XOR-operation is performed with the first and the second telegram. I.e. by performing the XOR-operation on a first telegram and its complementary second telegram, a third telegram is generated (third telegram is the result of the XOR-operation) which complies with the original telegram (valid). In case of a failure (e.g. an XOR-operation is performed on a first telegram and a non-complementary second telegram) a third telegram is generated which does not comply with the original telegram (invalid). The third telegram is transmitted from the fail-safe system to a safety-critical receiving systems e.g. a signal lamp, train, plane etc.

Each channel comprises a transmission controller with a 1-bit-wide and telegram-long buffer for transmitting the telegrams to or from the XOR-device. In order to achieve a correct XOR-operation (=logical operation that outputs true whenever both inputs differ) that outputs true whenever both inputs differ), the first, the second and the third telegram must have the same number of bits

The first input channel and the second input channel are preferably synchronized, in particular by frame synchronization, i.e. a sync signal is fed from the first input channel to the second input channel.

Although two input channels are preferred it is also possible to provide more than two channels.

In a preferred embodiment two input processors are provided. One input processor (first input processor) is arranged within the first input channel. The other input processor (second input processor) is arranged within the second input channel.

Preferably one of the input processors selects one of the first telegrams and the other input processor selects one of the second telegrams. In this case the first and the second telegram are selected independent from each other. Thus the risk of producing a faulty telegram at the system output is greatly reduced.

Alternatively the input processor is a common input processor, which selects a first telegram as well as a second telegram. Only one input processor is required; yet a high standard of the input processor is required. Otherwise this embodiment can hardly be used for high security level systems.

For safety reasons it is preferred to provide a first memory unit for storing the set of first telegrams, and a second memory unit for storing the set of second telegrams.

In a special embodiment two input units are provided, each input unit providing a first input (first input information) to the first input channel and second input (second input information) to the second input channel. Each input unit is connected to the first as well as to the second input channel. Thus the first input channel is provided with two first inputs and the second input channel is provided with two second inputs. A comparison of the double selected first inputs and the double selected second inputs respectively reduces the risk of false input evaluation.

In order to check, whether the third telegram is valid or not, a control process is carried out. The control process, which determines whether the third telegram is valid or not, is generally performed at a receiving subsystem, e.g. at a train. Additionally or alternatively the inventive fail-safe-system can comprise a control device for controlling whether the third telegram is valid or not. Thus, failure can be displayed directly at the fail-safe-device. The control device is arranged downstream the XOR-device. The third telegram is valid if it shows a correct structure, i.e. the structure of an original telegram from which the first and a complementary second telegram has been generated (see below "method"). The correct structure of the original telegram is achieved, if the XOR-operation on the first and the complementary second telegram is performed correctly. A valid third telegram contains a complex data message concerning safety-relevant instructions for a security relevant task to be carried out at or by the receiving system e.g. "switch signal lamp to green" "stop the train" etc., which is also contained in the original telegram from which the first and the second telegram are derived by performing a reversed XOR-operation.

In a preferred embodiment a modulator is provided for converting the third telegram into a modulated bit stream. The modulator (also called line encoder) converts the third telegram e.g. from a binary code to an analogue signal in order to send it to the receiving subsystem.

In an advantageous embodiment the modulator comprises a memory with capacity less than the number of bits of one of the telegrams. Thus, an unintentional repetition of a valid telegram by the modulator/line encoder can be prevented.

In a preferred embodiment at least one CRC supervision device is provided for controlling the checksum of the third telegram. Thereby, failures inside one channel can be detected at an early point of time, i.e. without help from a receiving subsystem. Preferably for each input channel one CRC supervision device is provided.

The invention also concerns a method for operating a fail-safe system as described above, the method comprising the following steps:
- offline-construction of a set of original telegrams;
- offline-generation of a set of first telegrams and a set of complementary second telegrams, such that an XOR-operation on one of the first telegrams and its complementary second telegram results in one of the original telegrams;
- storing the sets of first telegrams and complementary second telegrams in at least one memory unit of the fail-safe system;
- selection of one of the first telegrams and one of the second telegrams by an input processor in dependence of input information;
- input of the selected first telegram into a first input channel of an XOR-device;
- input of the selected second telegram into a second input channel of the XOR-device;
- performance of an XOR-operation on the first telegram and the second telegram resulting in a third telegram;
- output of the third telegram at the output channel of the XOR-device;
- checking, whether the third telegram is valid.

For each original telegram a pair of complementary telegrams are generated, each pair of telegram consisting of a first telegram and a complementary second telegram. Each first telegram and its complementary second telegram are generated such that an XOR-operation on the first telegram and its complementary second telegram results in the corresponding original telegram.

Preferably several (n) original telegrams are generates. The number of first telegrams corresponds with the number of original telegrams (with n ≥ 1, preferably n ≥ 2). The number of second telegrams (m) can differ from the number of first telegrams, but is preferably the same (m=n).

The selection of the first and second telegrams is carried out in dependence of the input information received by the input processor. Input information can comprise e.g. information concerning rail occupancy, weather conditions etc. The input information determines which original telegram is to be transmitted. The input processors select the corresponding first and second telegrams for further processing. The selection of the first telegram and the second telegram can be performed by two independent input processors or dependent input processors (e.g. with a common power supply), dependent on the required safety level.

The XOR-operation is preferably performed bitwise, i.e. two telegrams (bit patterns) of equal length are used. The XOR operation is performed on each pair of corresponding bits.

The checking (control process) whether the third telegram is valid or not will be done by the receiving subsystem and/or by an internal device, such as a CRC supervision device. In case the third telegram corresponds with the original telegram the third telegram is valid and a task according to the data message is executed (e.g. signal lamp is switched to "green"). In case the third telegram does not correspond with the original telegram the third telegram is invalid and a safe state action is carried out (e.g. keep signal lamp at "red" or switching signal lamp to "red" respectively).

In a preferred variant for each second telegram exactly one complementary first telegram is provided and vice versa, i.e. for each first telegram a separate second telegram is generated. Thus each first telegram complements exactly one second telegram and vice versa. In this preferred case the number of first telegrams stored in the first memory unit complies with the number of second telegrams stored in the second memory unit. A high security level can be achieved thereby, since - in case a first telegram has been selected incorrectly - a failure of the system is only given if the single complementary second telegram to the incorrectly selected first telegram is selected. This however is quite unlikely, in particular if a plurality of first and second telegrams are provided. In an alternative variant several first telegrams complement the same second telegram. This variant can be used for lower security levels or requires a highly reliable input processor.

Since the original telegram is constructed offline the error probability can be reduced.

In a preferred variant a CRC-supervision of the third telegram is carried out by single or duplicated CRC supervision devices. In case of duplicated CRC supervision devices one CRC supervision device for each channel is provided. Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Brief Description of the Drawings

The invention is shown in the drawings and will be explained in detail using exemplary embodiments.
- Fig. 1A: shows an inherent fail safe structure according to the state of the art.
- Fig. 1B: shows a composite fail safe structure according to the state of the art.
- Fig. 1C: shows a reactive fail-safe structure according to the state of the art.
- Fig. 2: shows a 2oo3 composite fail safe structure according to the state of the art.
- Fig. 3: shows a 2 out of 2 composite fail safe structure according to the state of the art.
- Fig. 4: shows a schematic view of a preferred embodiment of the inventive fail-safe-system using duplicate input units and independent input processors.

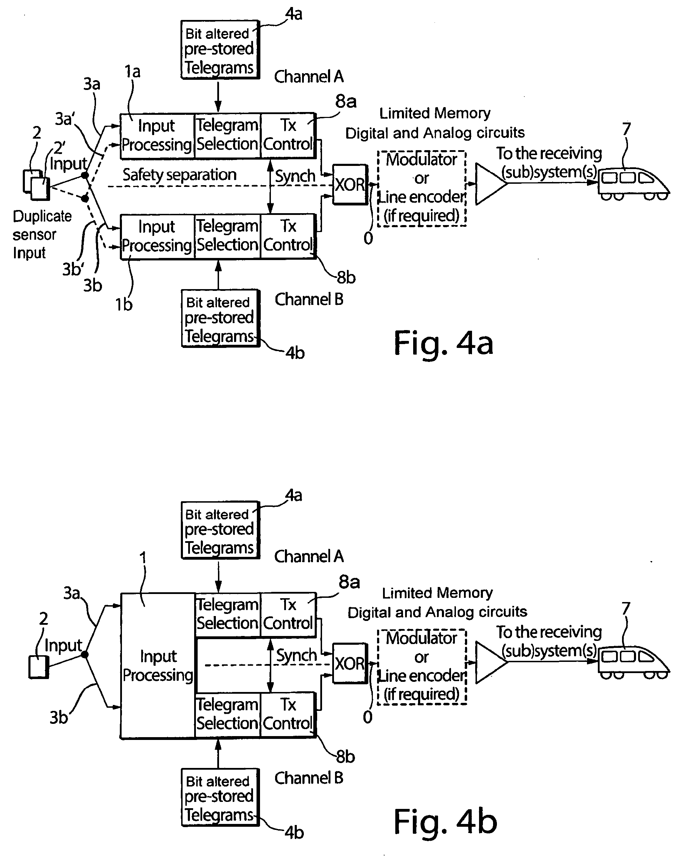

- Fig. 4: shows a schematic view of another preferred embodiment of the inventive fail-safe-system using single input unit and a common input processor.

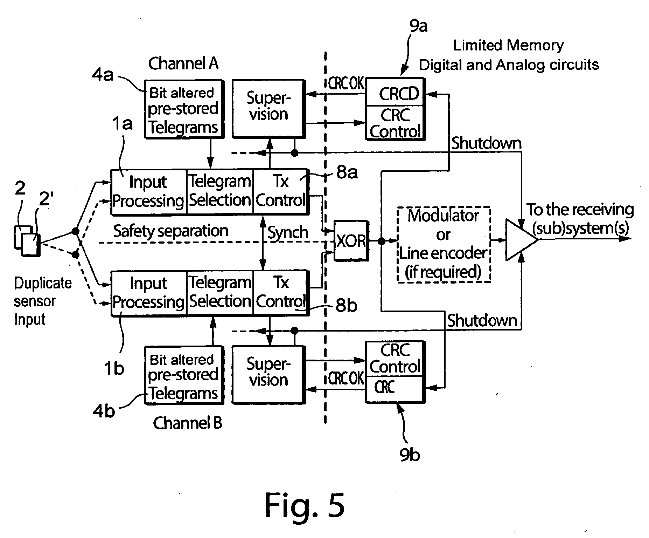

- Fig. 5: shows a schematic view of another preferred embodiment of the inventive fail-safe-system with CRC control.

### Detailed Description of the Invention and Drawings

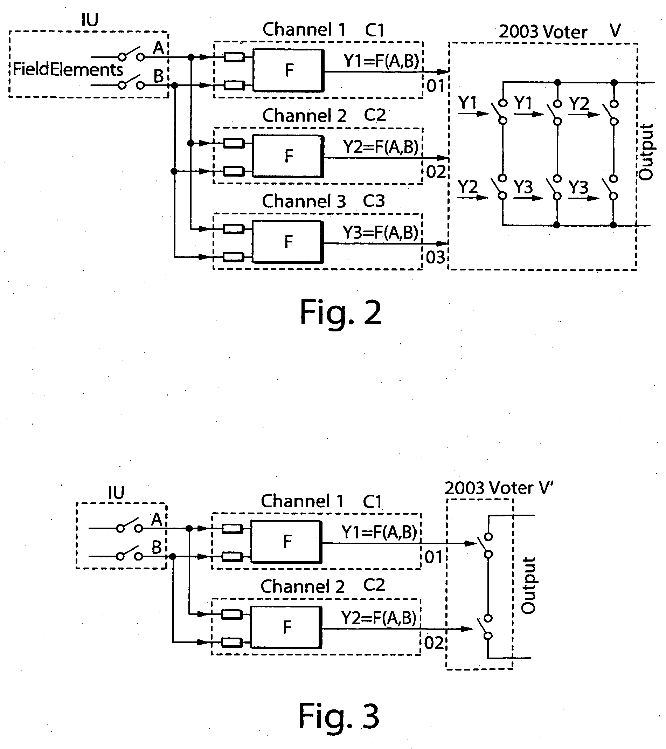

**Fig. 2 and 3** show different channel structures of a composite fail-safe structure according the state of the art. The composite fail-safe structure comprises different channels **C1, C2, C3,** a common input unit **IU** and several outputs **O1, O2, O3** (one for each channel). The outputs O1, O2, O3 of the channels C1, C2, C3, are voted by a voter **V, V'**. The "high input impedance" principle is used to non-intrusively share the inputs, i.e. the input channels are decoupled from each other by providing input resistances **R.**

A three channel structure of a composite fail-safe structure is shown in **fig. 2****.** The output voter V implements a "majority" function, also called 2 out of 3 (2oo3). Digital output state of "Low" is the safe state.

As another example, a two channel implementation is shown in **fig. 3****.** The output voter V' implements a "unanimity" function, also called 2 out of 2 (2oo2). The same as above, the digital output state of "Low" is the safe state.

Assuming for the sake of principle that the voter is in itself fail safe, it can be seen in both examples that even in failure, one channel cannot drive the output in "High" state only by itself, but always in conjunction with at least another channel.

The composite fail-safe devices shown in fig. 2 and 3 are not suitable for subsystems that output complex data messages (telegrams).

**Fig. 4a** shows an inventive fail safe system comprising a first input channel **A** with a first input processor **1a** and a second input channel **B** with a second input processor **1b**, the input channels A, B being functionally identical. The input processors 1a, 1b are each connected to input units 2, 2', each input unit 2, 2' providing a first input **3a, 3a'** (first input information) to the first input channel A and a second input **3b, 3b'** (second input information) to the second input channel B. The system inputs 3a, 3a', 3b, 3b' are non-intrusively distributed to both channels A, B, either by high impedance principle or by duplicate sensors or by combination of both.

The input processors 1a, 1b analyze and assess the state of the inputs 3a, 3a', 3b, 3b'. Functions such as signal filtering, de-bouncing, threshold detection and/or hysteresis are often implemented as well in this functional block, depending to the particular application. Given the fact that the number of inputs is limited, it results that the number of states of the input is also limited. If for example all inputs are of binary nature and a system would have N inputs, no more than two at the power of N (2^{N}) input states are possible. In addition, considering that one particular input state is allocated with one first and one second telegram (which actually describes the state of the inputs to the receiving system), it is practical to generate all telegrams outside of the machine, one for each input state, and prerecord them in memory units **4a, 4b.**

The input processors 1a, 1b each select one of the inputs 3a, 3a', 3b, 3b' for its corresponding channel A, B, whereby the input processor 1a of the first input channel A selects one of the first inputs, whereas the second input processor 1b selects one of the second inputs. According to the selected inputs the first input processor 1a selects a first telegram from the first memory 4a unit and the second input processor 1b selects a second telegram from the second memory unit 4b, i.e. the input processors select the complementary prerecorded telegrams that describe the input state. In a preferred implementation, a good description of the mechanism is that the memory unit comprises or has access to a look-up table having the inputs set as addresses in the look-up table. One input set combination will select a unique telegram from the look-up table. This applies for both channels. Separate look-up tables can be provided for the different channels.

Therefore once the inputs are assessed (filtered and validated as stable) a telegram will be selected from the memory unit 4a, 4b and transferred to a transmission controller **8a, 8b.** At start up or upon receiving a new telegram from the input processors 1a, 1b, one transmission controller 8a synchronizes itself with the other transmission controller 8b with the purpose of aligning the transmission frame (matching time frame.).

The system output consist in a telegram (third telegram) that reflects the input state processed by both channels A, B, according to the system transfer function and with agreement of both channels A, B (2 out of 2 principle). In order to achieve this, the selected first telegram and the selected second telegram are transmitted by transmission controllers 8a, 8b to an XOR-device 5. The XOR device performs an XOR-operation with the selected first telegram and the selected second telegram resulting in the third telegram which is output through an output channel **O**. A modulator **6** modulates the third telegram into a modulated bit stream in order to send it to a receiving subsystem **7,** e.g. a train or a traffic signal. A control unit (not shown) of the fail safe system and/or of the receiving unit checks whether the third telegram is valid or not.

In the preferred embodiment of this invention and for simplicity of principle exposure, the following assumption will be used: Given a limited number of the input distinctive states, and given a deterministic transfer function of the system, a practical limited number of output telegrams will result. Therefore all possible input dependent telegrams are composed off-line and then stored in the system memory units 4a, 4b. Alternatively, the generation of the telegrams could be done in real time by two independent processors according to predefined rules.

In addition, supplementary telegrams can be also constructed, related or unrelated with the input state but related with expected and non-expected states of the system. After off-line composition, it is preferred to alter the original telegrams bit by bit and then store the altered telegrams (first and second telegrams) in each channel's memory unit 4a, 4b.

The alteration algorithm is to be devised in such way that the re-composition of the telegram by bit wise XOR operation will result in the correct telegram (original telegram). Preferably, the alteration algorithm is devised in a way that addresses the data protection mechanism implemented by the countermeasures presented above.

E.g. the following algorithms are suitable for the invention preferred embodiment.

A systematic approach:
- The first telegram is generated according to defined specifications.
- The second telegram is "deducted" from the channel A in such way that XOR operation will result in the correct original telegram.

| | | | | | | | | | | | | | |
|---|---|---|---|---|---|---|---|---|---|---|---|---|---|
| Original telegram | 1 | 1 | 0 | 1 | 0 | 0 | 0 | 1 | 1 | 0 | 1 | 1 | 1 |
| first telegram | 1 | 0 | 0 | 1 | 1 | 0 | 1 | 0 | 1 | 0 | 1 | 0 | 1 |
| second telegram | 0 | 1 | 0 | 0 | 1 | 0 | 1 | 1 | 0 | 0 | 0 | 1 | 0 |
| | Bit wise A XOR B | | | | | | | | | | | | |
| third telegram after XOR operation | 1 | 1 | 0 | 1 | 0 | 0 | 0 | 1 | 1 | 0 | 1 | 1 | 1 |

A stochastic approach:
- The first telegram of channel A is randomly generated.
- The second telegram of channel B is "deducted" from the channel A in such way that XOR operation will result in the correct telegram.

Other approach:
- One alteration mechanism is applied on the telegram payload.
- A different alteration mechanism is applied to the telegram CRC field.

The following applies for all algorithms used with the present invention:
- Any altered telegram must fail the general parity check.
- Any altered telegram may show a sufficient number (i.e. enough to detect a fault with a given probability) of internal composition rules violations, such alphabet violation, partial parity check failure, etc.
- Any one channel telegram XOR-ed with the adjacent channel any other telegram must result in an invalid telegram with the exception of the intended pair telegram.

During synchronization, all zero, all one bits or quiet signal are to be transmitted at a line interface, as required or accepted by the application protocol. Once synchronization is achieved, both channels A, B must stay in Frame-Synch watching each other and using common bit timing from the transmission modulator/encoder 6. There are two 1-bit wide, telegram-length long buffers in the transmission controller 8a, 8b of each channel A, B.

One possible and preferred implementation of telegram generation is described in the following: There are two one-telegram long data buffers in the transmission controller 8a, 8b. The buffer holding the telegram to be transmitted is called "current", the second buffer is called "next". Any new telegram selected by the input processor 1a, 1b upon a new input state change is always stored in the "next" memory buffer. The "current" buffer holds and is used to transmit the current telegram, selected according to the previous input state. Based on the bit timing received from the line modulator/encoder 6, the complementary telegrams stored in each channel "current" buffer are clocked out to the XOR gate inputs. The current telegram transmission is transmitted as required by the application protocol until the input 3a, 3a', 3b, 3b' or internal state is changed and a new telegram arrives in the "next" buffer. On new telegram arrival, the transmission controller 8a, 8b is signaled about the input/internal state change; the transmission controller 8a, 8b finishes the current telegram, declares the "current" buffer as "next" (free for a new telegram) and the former "next" now becomes "current". The process described above is repeated every time the input set changes from one state to another.

In addition, the process of sending a new telegram may be triggered by a change in the internal state of the system, such the occurrence of an exception or an error.

For testing purpose, the process may be triggered intentionally by an internal supplementary mechanism even when no change has been detected in the inputs or in the internal system state.

In the following some failure modes of the fail-safe-system according to the present invention are described, thereby using the following definitions:
An "erroneous telegram interpretable as correct" is a telegram with a correct internal structure, with a valid CRC but by hazard it is not in correspondence with the state of the Input. In addition, the telegram carries a "permissive" message when the input is in "restrictive" state. This type of telegram will be referred as "unsafe".
An "invalid" telegram is a telegram that due to failure, noise or intentional distortion has an incorrect structure and/or the CRC does not check out. It is expected with a high degree of certainty that due to the incorrect CRC and/or due to the internal structural alteration, such telegram will be rejected by the receiving subsystem.
   - Failure: The XOR function allows only one channel telegram to pass.
      Mitigation: The sent third telegram is a "one channel telegram", which is invalid by definition.
   - Failure: One XOR function input is stuck on "one"/"zero".
      Mitigation: An invalid third telegram is sent (reverted/non-reverted one channel telegram).
   - Failure: One of the input channels A, B does not assess the input state correctly (erroneous input selection).
      Mitigation: The XOR-operation will compose two non-complementary telegrams; the result will be an invalid third telegram.
   - Failure: The modulator/line encoder 6 repeats one valid telegram, regardless of state of the input.
      Mitigations: The modulator/line encoder 6 is a limited memory circuit that cannot hold a full telegram.
   - Failure: Both channels A, B repeat synchronously the last valid telegram, regardless of current input state. This means that failures in the two channels A, B with identical effects have to be assumed. The probability for such failures is very low and for a low SIL (Safety Integrity Level), the failure rate is acceptable. Therefore no change in the system structure is required for low SIL. However there are a couple of approaches to mitigate such failure:
      Mitigation: Independent cycles in both channels and a reset to zero if one cycle or clock pulse is missing, by using a supplementary machine such as a watchdog.
      Mitigation: The architecture presented by this invention is fully suitable for HW/SW/FW (hardware/software/fixed wired) diversity which will greatly reduce the chance of similar double failure.
      Mitigation: When permitted, time stamps and sequence numbers can be inserted in the data protocol.
   - Failure: Both channels erroneously interpret the input state in the same way.
      Mitigation: The architecture presented by this invention is fully suitable for HW/SW/FW diversity.
   - Failure: Failure in the analogue chain.
      Mitigation: The telegram is randomly distorted or is not transmitted at all.

**Fig. 4b** shows an alternative embodiment using only one input processor **1** and one input unit **2.** In this case the common input processor 1 selects both, the first telegram for the first channel A and the second telegram for the second channel B. The further processing is analogue to that of the embodiment of fig. 4a. A common input processor can also be combined with a duplicated input (two input units). Also, a single input unit can be used with several input processors.

Another preferred embodiment of the present invention is shown in **fig. 5**. The structure of the inventive fail-safe system shown in fig. 5 additionally comprises a check-back function. The addition of the check-back function enhances the structure with the capability of early detection of failure inside one channel without help from the receiving system 7. Thus the system can undergo a complete shut down by itself preventing a subsequent failure of the healthy channel inside the repair reaction time. In spite of the check-back added structure, the classification of the structure presented by this invention as Composite Fail-Safe still holds, as the check-back does not explicitly carry back the entire output telegram as in Reactive Fail-Safe systems.

As it is presented in **Fig. 5****,** the added structure checks the output data stream of the XOR-device 5 against the telegram CRC polynomial, i.e. a CRC (cyclic redundancy check) is performed. A synchronization mechanism depicted in Fig. 5 as "CRC Control" carried out by a CRC supervision device **9a, 9b** may be required to ensure proper functionality of the CRC verification machine. A correct third telegram will produce a signal of good check ("CRC OK") at the output of the CRC supervision device 9a, 9b shown in Fig. 5. The signal and its relative position in the system timing are then used as verification of the telegram validity.

The check-back signal timing and detailed usage is application dependent, however the principle shown in Fig. 5 holds valid for any Data Output System application.

### List of reference numbers

- 1a, 1b: input processor
- 2, 2': input units
- 3a, 3a': first input
- 3b, 3b': second input
- 4a, 4b: memory units
- 5: XOR-device
- 6: modulator
- 7: receiving subsystem
- 8a, 8b: transmission controller
- 9a, 9b: CRC supervision device
- A, B, C1, C2, C3: channels
- IU: input unit
- O: output channel
- O1, O2, O3: outputs
- R: input resistances
- V, V': voter

## Claims

1. Fail-safe system for a data output system, the device comprising
• at least one memory unit (4a, 4b) with a prerecorded set of offline-generated first telegrams and a prerecorded set of offline-generated complementary second telegrams, wherein an XOR-operation on one of the first telegrams and its complementary second telegram results in an offline constructed original telegram,
• at least one input processor (1, 1a, 1b) for selecting in dependence of input information describing an input state of the system one of the stored first telegrams and one of the stored second telegrams; and
• an XOR-device (5) with a first input channel (A) for transmitting the selected first telegram, a second input channel (B) for transmitting the selected second telegram, and with an output channel (O) for transmitting a third telegram, the third telegram being the result of an XOR-operation of the first and the second telegram
• a receiving subsystem for receiving the third telegram.

2. Fail-safe system according to claim 1, **characterized in that** two input processors (1a, 1b) are provided.

3. Fail-safe system according to claim 2, **characterized in that** one of the input processors (1a) selects one of the first telegrams and the other input processor (1b) selects one of the second telegrams.

4. Fail-safe system according to claim 1, **characterized in that** the input processor (1) is a common input processor, which selects a first telegram as well as a second telegram.

5. Fail-safe system according to one of the preceding claims, **characterized in that** a first memory unit (4a) for storing the set of first telegrams, and a second memory unit (4b) for storing the set of second telegrams.

6. Fail-safe system according to one of the preceding claims, **characterized in that** two input units (2, 2') are provided, each input unit (2, 2') providing a first input to the first input channel (A) and second input to the second input channel (B).

7. Fail-safe system according to one of the preceding claims, **characterized in that** a control device is provided for controlling whether the third telegram is valid or not.

8. Fail-safe system according to one of the preceding claims, **characterized in that** a modulator (6) is provided for converting the third telegram into a modulated bit stream.

9. Fail-safe system according to claim 8, **characterized in that** the modulator (6) comprises a memory with capacity less than the number of bits of one of the telegrams.

10. Fail-safe system according to one of the preceding claims, **characterized in that** at least one CRC supervision device (9a, 9b) is provided for controlling the checksum of the third telegram.

11. Method for operating a fail-safe system according to one of the preceding claims, the method comprising the following steps:
• offline-construction of a set of original telegrams;
• offline-generation of a set of first telegrams and a set of complementary second telegrams, such that an XOR-operation on one of the first telegrams and its complementary second telegram results in one of the original telegrams;
• storing the sets of first telegrams and complementary second telegrams in at least one memory unit (4a, 4b) of the fail-safe system;
• selection by an input processor (1a, 1b) of one of the first telegrams and one of the second telegrams in dependence of input information describing an input state of the system;
• input of the selected first telegram into a first input channel (A) of an XOR-device (5);
• input of the selected second telegram into a second input channel (B) of the XOR-device (5);
• performance of an XOR-operation on the first telegram and the second telegram resulting in a third telegram;
• output of the third telegram at the output channel (0) of the XOR-device (5);
• checking, whether the third telegram is valid.

12. Method according to claim 11, **characterized in that** for each second telegram exactly one corresponding first telegram is provided and vice versa.

13. Method according to one of the claims 11 through 12 **characterized in that** a CRC-supervision of the third telegram is carried out by single or duplicated CRC supervision devices (9a, 9b).

## Patentansprüche

1. Ausfallsicherungssystem für ein Datenausgabesystem, wobei das System umfasst
- mindestens eine Speichereinheit (4a, 4b) mit einem vorab aufgenommenen Satz von offline erzeugten ersten Telegrammen und einem vorab aufgenommenen Satz von offline erzeugten komplementären zweiten Telegrammen, wobei durch eine XOR-Operation an einem der ersten Telegramme und seinem komplementären zweiten Telegramm ein offline konstruiertes ursprüngliches Telegramm entsteht;
- mindestens einen Eingabeprozessor (1, 1a, 1b) zum Auswählen eines der gespeicherten ersten Telegramme und eines der gespeicherten zweiten Telegramme in Abhängigkeit der Eingabeinformationen, die einen Eingabezustand des Systems beschreiben; und
- eine XOR-Vorrichtung (5) mit einem ersten Eingabekanal (A) zum Übermitteln des ausgewählten ersten Telegramms, einem zweiten Eingabekanal (B) zum Übermitteln des ausgewählten zweiten Telegramms und mit einem Ausgabekanal (O) zum Übermitteln eines dritten Telegramms, wobei das dritte Telegramm das Ergebnis einer XOR-Operation des ersten und zweiten Telegramms ist;
- ein Empfang-Untersystem zum Empfangen des dritten Telegramms.

2. Ausfallsicherungssystem nach Anspruch 1, **dadurch gekennzeichnet, dass** zwei Eingabeprozessoren (1a, 1b) vorgesehen sind.

3. Ausfallsicherungssystem nach Anspruch 2, **dadurch gekennzeichnet, dass** einer der Eingabeprozessoren (1a) eines der ersten Telegramme auswählt und der andere Eingabeprozessor (1b) eines der zweiten Telegramme auswählt.

4. Ausfallsicherungssystem nach Anspruch 1, **dadurch gekennzeichnet, dass** der Eingabeprozessor (1) ein gemeinsamer Eingabeprozessor ist, der sowohl ein erstes Telegramm als auch ein zweites Telegramm auswählt.

5. Ausfallsicherungssystem nach einem der vorhergehenden Ansprüche, **gekennzeichnet durch** eine erste Speichereinheit (4a) zum Speichern des Satzes von ersten Telegrammen und eine zweite Speichereinheit (4b) zum Speichern des Satzes von zweiten Telegrammen.

6. Ausfallsicherungssystem nach einem der vorhergehenden Ansprüche, **dadurch gekennzeichnet, dass** zwei Eingabeeinheiten (2, 2') vorgesehen sind, wobei jede Eingabeeinheit (2, 2') eine erste Eingabe für den ersten Eingabekanal (A) und eine zweite Eingabe für den zweiten Eingabekanal (B) bereitstellt.

7. Ausfallsicherung nach einem der vorhergehenden Ansprüche, **dadurch gekennzeichnet, dass** eine Kontrollvorrichtung vorgesehen ist, um zu kontrollieren, ob das dritte Telegramm gültig ist oder nicht.

8. Ausfallsicherungssystem nach einem der vorhergehenden Ansprüche, **dadurch gekennzeichnet, dass** ein Modulator (6) vorgesehen ist, um das dritte Telegramm in einen modulierten Bit-Strom zu konvertieren.

9. Ausfallsicherungssystem nach einem der vorhergehenden Ansprüche, **dadurch gekennzeichnet, dass** der Modulator (6) einen Speicher aufweist, dessen Kapazität kleiner ist als die Anzahl an Bits eines der Telegramme.

10. Ausfallsicherungssystem nach einem der vorhergehenden Ansprüche, **dadurch gekennzeichnet, dass** mindestens eine CRC-Überwachungsvorrichtung (9a, 9b) vorgesehen ist, um die Prüfsumme des dritten Telegramms zu kontrollieren.

11. Verfahren zum Betreiben eines Ausfallsicherungssystems nach einem der vorhergehenden Ansprüche, wobei das Verfahren die folgenden Schritte aufweist:
- Offline-Konstruktion eines Satzes von ursprünglichen Telegrammen;
- Offline-Erzeugung eines Satzes von ersten Telegrammen und eines Satzes von komplementären zweiten Telegrammen, so dass durch eine XOR-Operation an einem der ersten Telegramme und seinem komplementären zweiten Telegramm eines der ursprünglichen Telegramme entsteht;
- Speichern der Sätze von ersten Telegrammen und komplementären zweiten Telegrammen in mindestens einer Speichereinheit (4a, 4b) des Ausfallsicherungssystems;
- Auswahl durch einen Eingabeprozessor (1a, 1b) eines der ersten Telegramme und eines der zweiten Telegramme in Abhängigkeit der Eingabeinformationen, die einen Eingabezustand des Systems beschreiben;
- Eingabe des gewählten ersten Telegramms in einen ersten Eingabekanal (A) einer XOR-Vorrichtung (5);
- Eingabe des gewählten zweiten Telegramms in einen zweiten Eingabekanal (B) der XOR-Vorrichtung (5);
- Ausführen einer XOR-Operation an dem ersten Telegramm und an dem zweiten Telegramm, wodurch ein drittes Telegramm entsteht;
- Ausgabe des dritten Telegramms an dem Ausgabekanal (O) der XOR-Vorrichtung (5);
- Prüfen, ob das dritte Telegramm gültig ist.

12. Verfahren nach Anspruch 11, **dadurch gekennzeichnet, dass** für jedes zweite Telegramm genau ein entsprechendes erstes Telegramm bereitgestellt wird und umgekehrt.

13. Verfahren nach einem der Ansprüche 11 bis 12, **dadurch gekennzeichnet, dass** eine CRC-Überwachung des dritten Telegramms durch einzelne oder duplizierte CRC-Überwachungsvorrichtungen (91, 9b) ausgeführt wird.

## Revendications

1. Système résistant aux pannes pour un système de sortie de données, le système comprenant :
- au moins une unité de mémoire (4a, 4b) comprenant un ensemble préenregistré de premiers télégrammes générés hors ligne et un ensemble préenregistré de seconds télégrammes complémentaires générés hors ligne, dans laquelle une opération XOR sur un des premiers télégrammes et son deuxième télégramme complémentaire résulte en un télégramme original construit hors-ligne ;
- au moins un processeur d'entrée (1, 1a, 1 b) pour choisir, en fonction d'informations d'entrée décrivant un état d'entrée du système, un des premiers télégrammes stockés et un des deuxièmes télégrammes stockés ; et
- un dispositif XOR (5) avec un premier canal d'entrée (A) pour transmettre le premier télégramme choisi, un second canal d'entrée (B) pour transmettre le deuxième télégramme choisi, et avec un canal de sortie (O) pour transmettre un troisième télégramme, le troisième télégramme étant le résultat d'une opération XOR sur le premier et le deuxième télégramme ; et
- un sous-système de réception pour recevoir le troisième télégramme.

2. Système résistant aux pannes selon la revendication 1, **caractérisé en ce que** deux processeurs d'entrée (1a, 1b) sont utilisés.

3. Système résistant aux pannes selon la revendication 2, **caractérisé en ce qu'**un des processeurs d'entrée (1a) choisit un des premiers télégrammes, tandis que l'autre processeur d'entrée (1b) choisit un des deuxièmes télégrammes.

4. Système résistant aux pannes selon la revendication 1, **caractérisé en ce que** le processeur d'entrée (1) est un processeur d'entrée commun qui sélectionne un premier télégramme aussi bien qu'un deuxième télégramme.

5. Système résistant aux pannes selon l'une des revendications précédentes, **caractérisé par** une première unité de mémoire (4a) pour stocker l'ensemble de premiers télégrammes et une seconde unité de mémoire (4b) pour stocker l'ensemble de deuxièmes télégrammes.

6. Système résistant aux pannes selon l'une des revendications précédentes, **caractérisé en ce que** deux unités d'entrée (2, 2') sont utilisées, chaque unité d'entrée (2, 2') fournissant une première entrée vers le premier canal d'entrée (A) et une seconde entrée vers le second canal d'entrée (B).

7. Système résistant aux pannes selon l'une des revendications précédentes, **caractérisé en ce qu'**un dispositif de commande est utilisé pour commander que le troisième télégramme soit valide ou non.

8. Système résistant aux pannes selon l'une des revendications précédentes, **caractérisé en ce qu'**un modulateur (6) est utilisé pour convertir le troisième télégramme en un flux binaire modulé.

9. Système résistant aux pannes selon la revendication 8, **caractérisé en ce que** le modulateur (6) comprend une mémoire avec une capacité inférieure au nombre de bits d'un des télégrammes.

10. Système résistant aux pannes selon l'une des revendications précédentes, **caractérisé en ce qu'**au moins un dispositif de surveillance CRC (9a, 9b) est utilisé pour commander la somme de vérification du troisième télégramme.

11. Procédé de fonctionnement d'un système résistant aux pannes selon l'une des revendications précédentes, le procédé comprenant les étapes suivantes :
- construire hors ligne un ensemble de télégrammes originaux ;
- générer hors ligne un ensemble de premiers télégrammes et un ensemble de seconds télégrammes complémentaires de sorte qu'une opération XOR sur un des premiers télégrammes et son deuxième télégramme complémentaire résulte en un des télégrammes originaux ;
- stocker les ensembles de premiers télégrammes et de seconds télégrammes complémentaires dans au moins une unité de mémoire (4a, 4b) du système résistant aux pannes ;
- sélectionner, à l'aide d'un processeur d'entrée (1a, 1b), un des premiers télégrammes et un des seconds télégrammes en fonction d'informations d'entrée décrivant un état d'entrée du système ;
- entrer le premier télégramme choisi dans un premier canal d'entrée (A) d'un dispositif XOR (5) ;
- entrer le deuxième télégramme choisi dans un second canal d'entrée (B) du dispositif XOR (5) ;
- effectuer une opération XOR sur le premier télégramme et sur le deuxième télégramme résultant en un troisième télégramme ;
- émettre le troisième télégramme au niveau du canal de sortie (O) du dispositif XOR (5) ;
- vérifier si le troisième télégramme est valide.

12. Procédé selon la revendication 11, **caractérisé en ce que**, pour chaque deuxième télégramme, exactement un premier télégramme correspondant est fourni et vice-versa.

13. Procédé selon l'une des revendications 11 à 12, **caractérisé en ce qu'**une surveillance CRC du troisième télégramme est effectuée par des dispositifs de surveillance CRC uniques ou dupliqués (9a, 9b).
